Europäisches Patentamt

European Patent Office

Office européen des brevets

(19)

(11) Veröffentlichungsnummer: **0 134 832**
**B1**

(12) EUROPÄISCHE PATENTSCHRIFT

(45) Veröffentlichungstag der Patentschrift: 02.05.90

(51) Int. Cl.⁵: **A 01 D 45/02**

(21) Anmeldenummer: **83109221.8**

(22) Anmeldetag: **17.09.83**

(54) Gerät zum Ernten von Mais oder anderen Körnerfrüchten.

(43) Veröffentlichungstag der Anmeldung:
27.03.85 Patentblatt 85/13

(45) Bekanntmachung des Hinweises auf die
Patenterteilung: 02.05.90 Patentblatt 90/18

(84) Benannte Vertragsstaaten:
AT BE CH DE FR GB IT LI LU NL SE

(56) Entgegenhaltungen:
EP-A-0 091 635
DE-A-1 482 851
FR-A-2 385 319
US-A-2 372 569
US-A-2 571 811

(73) Patentinhaber: **Kalverkamp, Klemens**
**Warendorfer Strasse 265**
**D-4730 Ahlen/Westfalen (DE)**

(72) Erfinder: **Kalverkamp, Klemens**
**Warendorfer Strasse 265**
**D-4730 Ahlen/Westfalen (DE)**

(74) Vertreter: **Habbel, Hans-Georg, Dipl.-Ing.**
**Postfach 3429 Am Kanonengraben 11**
**D-4400 Münster (DE)**

Courier Press, Leamington Spa, England.

**Beschreibung**

Die Erfindung betrifft eine Vorrichtung zum Ernten von Mais oder anderen Körnerfrüchten gemäß dem Oberbegriff des Hauptanspruches.

Aus der DE—A—1 482 851 ist ein gattungsbildendes Erntegerät für Mais oder andere in Reihen angebaute Feldfrüchte bekannt, das als Vorsatzgerät für eine Getreideerntemaschine, d.h. einen Mähdrescher, ausgebildet ist. Das Erntegerät weist Einzugswalzen und als Teilummantelungen ausgebildete Leitvorrichtungen für die Erntepflanzen auf, die quer zur Fahrtrichtung der Erntemaschine angeordnet sind. Die Erntepflanzen werden durch Räder in das Erntegerät eingezogen und nach hinten geneigt von den Einzugswalzen durch den Pflückspalt des Erntegerätes hindurchgezogen. Die Erntepflanzen bleiben nach dem Erntevorgang auf dem Erdboden leigen und werden nach einer späteren Zerkleinerung untergepflügt. Bei dieser bekannten Einrichtung wird der Maisstengel sehr stark um die Einzugswalze gebogen und neigt daher dazu, im Bereich der einzelnen Knoten des Meisstengels abzureißen, so daß dadurch die Pflückarbeit beeinträchtigt wird.

Aus der älteren nicht vorveröffentlichen EP—A—0 091 635 ist ein Gerät zum Ernten von Mais oder anderen Körnerfrüchten bekannt, bei welchem ebenfalls ein quer zur Fahrtrichtung liegender Pflückspalt erwähnt ist.

Der Erfindung liegt die Aufgabe zugrunde, die gattungsbildende Einrichtung dahingehend zu verbessern, daß einerseits ein problemloses Durchziehen des Maisstengels durch den Pflückspalt möglich ist, dabei gleichzeitig aber die bei der gattungsbildenden Einrichtung notwendigen, erheblichen Kraftaufwendungen für diesen Arbeitsgang verringert werden.

Diese Aufgabe wird durch die Lehre des Hauptanspruches gelöst.

Die ebene Ausbildung der Teilummantelung im oberen Teil erlaubt vorteilhaft eine einwandfreie und reibungsarme Querbewegung der eingezogenen Pflanzen. Darüberhinaus sorgt sie dafür, daß die Pflanzen sowohl für den Pflückvorgang der Früchte, als auch für die Zerkleinerung vorteilhaft in Fahrtrichtung nahezu senkrecht verharren können. So ergibt sich eine gegenüber der bekannten Ausführung wesentliche Verbesserung des Pflückvorganges und des Einzugsverhaltens der Pflanze.

In einer Ausgestaltung der Erfindung ist vorgesehen, daß der ebene Teil der Teilummantelung gegenüber dem Erdboden etwa senkrecht steht und einen Winkel zwischen 80 und 100°, vorzugsweise zwischen 85 und 95° gegenüber dem Erdboden bildet. Dies ist die vorteilhafte mögliche Arbeitsstellung des ebenen Teils der Teilummantelung, die für einen einwandfreien Einzugsvorgang und eine einwandfreie Zerkleinerung notwendig ist.

Durch eine Schlitzreihe zur Aufnahme von Schneidmessern unterhalb der Einzugswalze wird eine besonders einfache Ausbildung der Schneidvorrichtung erreicht. Die Schneidmesser brauchen lediglich durch die Schlitzreihe hindurchgesteckt zu werden, um ihre Aufgabe erfüllen zu können. Die Einzungswalze weist einfach ebenfalls entsprechend den Messerpositionen Schlitze auf und die Querbewegung der Erntepflanzen sorgt für eine Schrägstellung, die zu der gewünschten Zerkleinerung in Schrägrichtung führt. Das Einbringen der Schlitzreihe in die Teilummantelung ist äußerst einfach, so daß sich insgesamt eine sehr kostengünstig herstellbare Schneidvorrichtung für die Erntepflanzen ergibt.

Außerhalb der Teilummantelung sind Spannleisten für die Schneidmesser angeordnet. So ergibt sich eine besonders einfache und robuste Ausführung der Schneidvorrichtung, die gleichzeitig ein schnelles Auswechseln stumpf gewordener Schneidmesser erlaubt. Die Teilummantelung und die Einzugswalze können an ihrer Position verbleiben, die stumpf gewordenen Schneidmesser werden nach Lösen einiger Schrauben der Spannleisten aus der Schlitzreihe herausgezogen und ausgewechselt.

Da die Teilummantelung außen unten eine Auflagekante für Schneidmesser und ihre Befestigungsvorrichtung aufweist, ergibt sich vorteilhaft eine genaue Positionierung der Schneidmesser bezüglich der Teilummantelung und damit auch bezüglich der Einzugswalze, die zu einer sicheren und einfachen Einstellung der Schneidmesser führt.

In weiterer Ausgestaltung der Erfindung ist vorgesehen, daß die Teilummantelung oben eine Brechkante, insbesondere in Form eines Rundeisens aufweist und daß auf der anderen Spaltseite ein Führungs- und Abdeckblech angeordnet ist. So ergibt sich ein Pflückspalt für die zu erntenden Pflanzen, der sowohl für eine einwandfreie Führung der Pflanzen bei dem Pflückvorgang, als auch für ein einwandfreies Brechen der Kolbenstiele der zu erntenden Früchte sorgt. So wird ein einwandfreier Erntevorgang erreicht und das Ernteergebnis liegt bezüglich des Ausbringens einwandfreier, nicht gequetschter Früchte über dem bisher bekannten.

In weiterer Ausgestaltung der Erfindung ist vorgesehen, daß die Einzugswalzen auf ihrer Pflanzeneintrittsseite schneckenartig ausgebildet sind, wobei die schneckenartige Ausbildung vorzugsweise ein Drittel bis die Hälfte der gesamten Einzugswalzenlänge ausmacht. So ergibt sich vorteilhaft eine weitere Verbesserung des Einziehens und Umlenkens der Erntepflanzen. Weiterhin wird das Auftreten von Drehmomentspritzen vermieden. Eine stoßartige Belastung der Antriebselemente etc. kann nicht auftreten, so daß diese leichter ausgebildet werden können. Darüberhinaus ergibt sich ein gleichmäßigeres Arbeiten ohne Schwingungen. Die Beeinträchtigung der Zerkleinerungslänge ist nicht schädlich, wenn die Einzugswalze zumindest zur Hälfte als Schneidvorrichtung ausgebildet ist. Ein Drittel der Einzugswalzenlänge von insgesamt etwa 400 mm in Schneckenform reicht normalerweise aus, um ein einwandfreies Einziehen der Pflanzen zu erreichen.

In weiterer Ausgestaltung der Erfindung ist vorgesehen, daß das Erntegerät mehrteilig ausgebildet ist und Einzugswalzenteilersptizen mit Einzugsketten aufweist, wobei die Einzugsketten vorzugsweise Einzelantriebe, vorzugsweise Elektro- oder Hydraulikmotore, aufweisen. Teilerspitzen sind für querliegende Einzugswalzen an und für sich nicht notwendig, es hat sich jedoch gezeigt, daß sie den gesamten Erntevorgang vorteilhaft beeinflussen. Auch außerhalb der Reihe stehende Pflanzen, oder Pflanzen, die auf dem Boden liegen, werden aufgenommen, und dem Spalt vor der Einzugswalze zugeführt.

Einzelantriebe für die Einzugsketten, vorzugsweise Elektro- oder Hydraulikmotore sorgen dabei für einen einfachen und kostengünstigen Antrieb der Einzugsketten. Dabei ergibt sich eine weitere Gewichtsverminderung des erfindungsgemäßen Erntegeräts durch Fortfall schwerer Getriebe- und Übertragungselemente.

Es ist weiterhin vorgesehen, daß die Einzugsketten riemenförmig ausgebildet sind und insbesondere aus Kunststoff oder Gummi bestehen. So ergibt sich eine weitere Erleichterung und Vereinfachung des Erntegeräts. Darüberhinaus ist diese Ausführung besonders verschleißarm.

In weiterer Ausgestaltung der Erfindung ist schließlich vorgesehen daß das Erntegerät aus mehreren gleichen Einzel-Erntemodulen zusammengesetzt ist, wobei die Modulabstände durch Zwischenstücke auf den Reihenabstand der Erntepflanzen einstellbar sind. Hierdurch wird vorteilhaft erreicht, daß auch unterschiedliche Reihenabstände einfach ausgleichbar sind, so daß den verschiedenen nationalen Eigenheiten Rechnung getragen werden kann. Es sind mit den gleichen Einzel-Erntemodulen Reihenabstände von 50 cm an aufwärts beliebig einstellbar.

Die Erfindung wird in Zeichnungen in einer bevorzugten Ausführungsform gezeigt, wobei aus den Zeichnungen weitere vorteilhafte Einzelheiten der Erfindung entnehmbar sind.

Die Zeichnungen zeigen im einzelnen:

Fig. 1 ein Erntegerät mit querliegenden Pflückspalten vor einem Erntefahrzeug,

Fig. 2 ein Erntegerät in Seitenansicht,

Fig. 3 ein Erntegerät mit einer Fangvorrichtung für die zerkleinerten Erntepflanzen, in Seitenansicht,

Fig. 4 einen einzelnen Erntemodul mit angedeuteter Teilerspitze in Aufsicht und

Fig. 5 ein Erntemodul in Seitenansicht und in Schnitt.

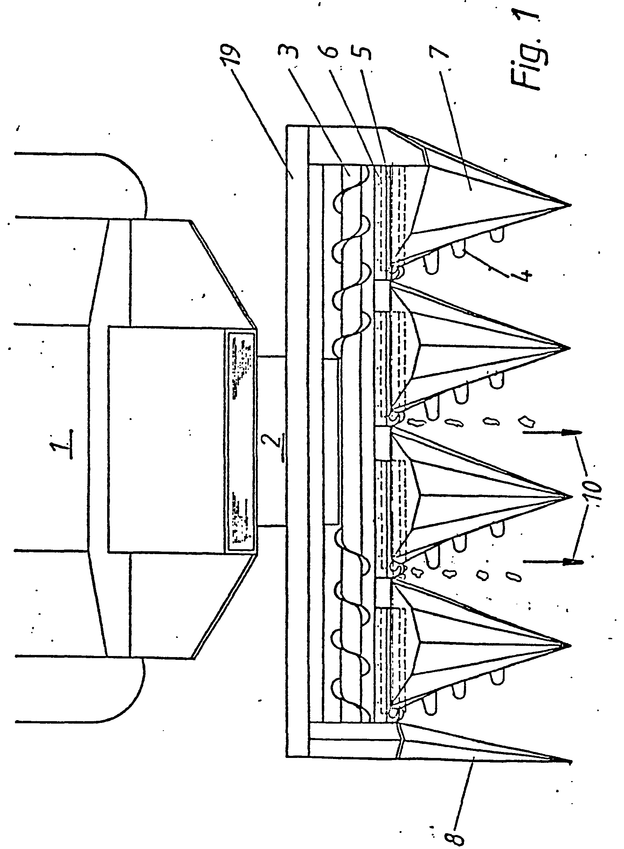

In Fig. 1 bezeichnet 1 das Erntefahrzeug mit dem Schrägförderer 2 für die geernteten Früchte. Diese werden dem Schrägförderer 2 durch die gegenläufige Schnecke 3 zugeführt, die sich unmittelbar hinter den querliegenden Pflückspalten 5 mit den Ummantelungen 6 befindet. Durch diese Anordnung wird der Transportweg der gepflückten Früchte, z.B. von Maiskolben, vorteilhaft schonend kurz. Die Einzugsketten 4 verlaufen etwas schräg zur Fahrtrichtung, die durch die Bewegungspfeile 10 angedeutet ist. Die Mittenteiler sind mit 7, der Pflückspalt ist mit 5 und der Außenteiler mit 8 beziechnet. Das Erntegerät 19 selbst ist an nicht näher gezeigten, da nicht zur Erfindung gehörigen, Streben mit dem Erntefahrzeug 1 verbunden.

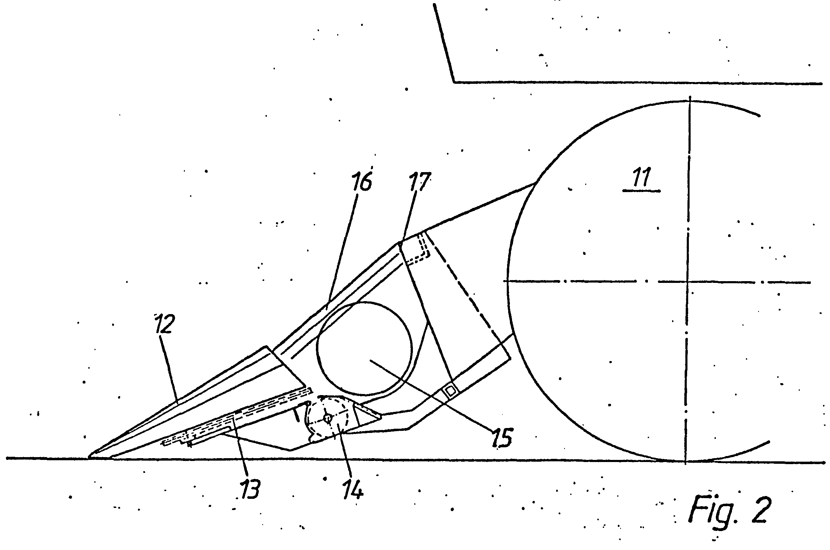

In Fig. 2 bezeichnet 11 die Vorderachse des Erntefahrzeugs, während 15 die Querförderschnecke für die Früchte bezeichnet. Das Einziehen der Erntepflanzen geschieht über die Einzugswalze 14, die hinter der Einzugskette 13 angeordnet ist. Die Einzugskette 13 befindet sich unter der Teilerspitze 12, die sehr kurz ausgebildet ist und sich unmittelbar an das Deckblech 16 über der Förderschnecke 15 anschließt. Das Erntegerät selbst ist über einen Schnellverschluß in der Linie 17 mit dem Erntefahrzeug verbunden, so daß ein leichtes und schnelles Auswechseln gegen andere Vorsatzgeräte möglich ist. Der Anstellwinkel dieses Erntegerät ist ca. 15°. Dieser Anstellwinkel hat sich für die Kurzbauweise mit querliegender Einzugswalze als optimal herausgestellt.

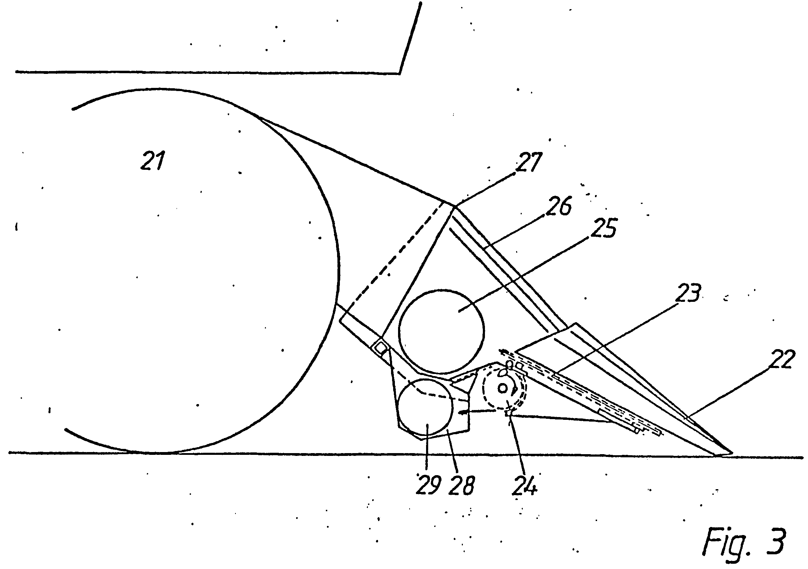

In Fig. 3 bezeichnet 21 die Vorderachse des Erntefahrzeugs und 25 die Förderschnecke für die geernteten Früchte z.B. die Maiskolben. Unter der Förderschnecke 25, ein gewisser Versatz nach vorn oder hinten ist möglich, befindet sich eine weitere Förderschnecke 29 für die Aufnahme zerkleinerter Erntepflanzen. Die Einzugswalze 24 ist zur Zerkleinerung mit Zerkleinerungsmessern o.ä. ausgerüstet. Die zerkleinerten Pflanzen werden in den Fangkorb 28 geschleudert, dort gesammelt und durch die Förderschnecke 29 dem Erntefahrzeug zugeführt, von dem aus sie z.B. durch eine pneumatische Fördervorrichtung auf einen Wagen, der neben dem Erntefahrzeug herfährt, gefördert werden.

Die Teilerspitze 22 mit der Einzugskette 23 weist einen etwas größeren Anstellwinkel als 15° gegenüber der Erdoberfläche auf, z, B. 20°. Wie sich gezeigt hat, ist bei querliegenden Einzugswalzen ein solcher Anstellwinkel nicht schädlich. Der Einzug in die querliegenden Einzugswalzen ist von dem Anstellwinkel der Spitzen vorteilhaft völlig unabhängig. Auch ein noch größerer Anstellwinkel bei der Anordnung weiterer Aggregate an der Unterseite des Erntegerätes hat sich nicht als schädlich herausgestellt.

Die in Fig. 3 gezeigte Ausführung zeigt eine besonders günstige Ausführung für eine Nutzung sowohl der Früchte als auch der Pflanze, z.B. für Silozwecke. Diese Ausführung macht in besonderer Weise die Vorteile querliegender Einzugswalzen mit integrierter Zerkleinerung deutlich.

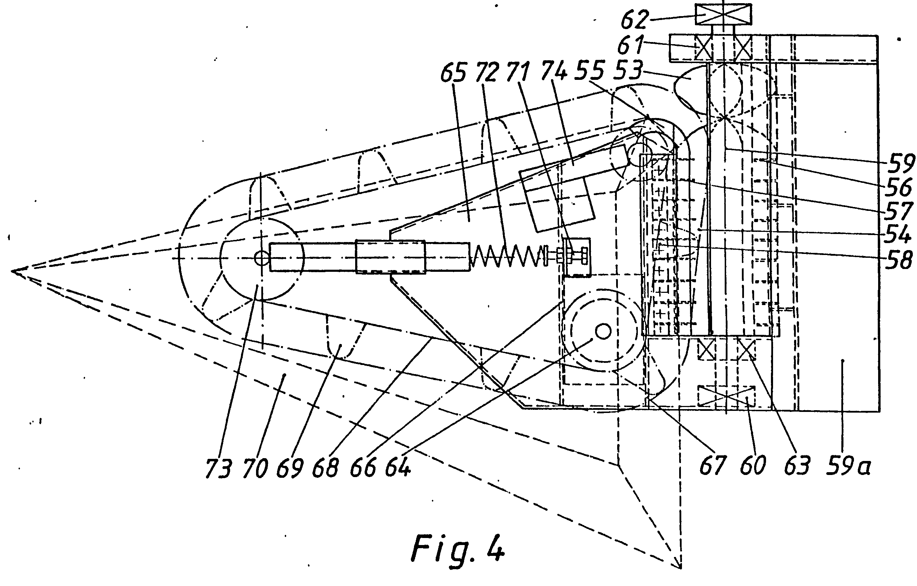

In Fig. 4 bezeichnet 53 den äußeren Teil der Einzugswalze mit schneckenartigen Einzugsgängen und 54 den zylindrischen Teil mit parallel zur Rotationsachse verlaufenden Einzugsstegen. Das Verhältnis von Einzugsgängen zu parallelen Einzugsstegen liegt zwischen 1/3 zu 2/3 und 1/2 zu 1/2. Im gezeichneten Fall ist er in besonders günstiger Relation 1,5 zu 2,5. Oberhalb des Einzugswalzenteils mit parallelen Stegen ist die Brechkante 55 angeordnet, die gebogen in die Reihen der nicht eingezeichneten Pflanzen einläuft. Die parallelen Stege des Einzugswalzenteils 54 weisen Ausnehmungen 56 für Schneidmesser auf, die durch die Leiste 58 geklemmt sind und deren sichtbarer Teil mit 57 bezeichnet ist. Überraschenderweise ergibt sich trotz der senkrecht stehenden Schneidmesser durch die seitliche Bewegung der eingezogenen Pflanze ein Schrägabschnitt der Pflanze, der die Schneidkräfte gegenüber einer Zerkleinerung senkrecht zur Faser erheblich herabsetzt und den gewonnenen Schnitzeln eine besonders günstige Form gibt.

Das Einzel-Erntemodul, das in Fig. 4 gezeigt ist, weist an der Oberseite ein Deckblech 59 auf, dessen Vorderseite als Führungsblech für die eingezogenen Erntepflanzen dient und dessen hinterer Teil 59 a den Übergang zu dem Erntefahrzeug schafft. Die Einzugswalze 53, 54 ist seitlich in Lagern 61 und 63 gelagert und weist außen Kupplungen 60 und 62 auf, die es ermöglichen, die einzelnen Erntemodule kinematisch miteinander zu verbinden, so daß alle Module eines Vorsatzgerätes lediglich einen gemeinsamen seitlich außen angeordneten Antrieb benötigen. So ergibt sich sowohl eine Anpaßbarkeit an unterschiedliche Reihenabstände als auch eine kostengünstige Serienfertigung bei einer leichten und einfachen Ausführung des Erntegeräts mit nur einem seitlichen Antrieb, z.B. durch eine Kette oder einen Keilriemen.

Die Einzugskette 68 mit den Mitnehmern 69 wird durch einen Motor 64 angetrieben, der insbesondere als Elektromotor ausgebildet ist. So ergibt sich ein besonders leichter und gut regelbarer Antrieb der Einzugskette 68. Es kann jedoch auch ein Winkelgetriebe zum Antrieb der Einzugskette 68 verwendet werden, das dann seitlich unterhalb der Einzugswalze 54 angeordnet sein würde.

Die Einzugskette 68 wird durch die Feder 72 gespannt, die einstellbar durch die Schraube 71 auf das vordere Einzugskettenrad 73 wirkt. Das hintere Kettenrad am Anfang der Brechkante 55 wird durch die Halterung 74 gehalten. Oberhalb des Einzel-Erntemoduls ist die Teilerspitze 65 angeordnet, die hier nur angedeutet gezeigt ist. Die Schneidmesser selbst werden durch die Leiste 58 gehalten, die verdeckt ist und sind mit 57 bezeichnet.

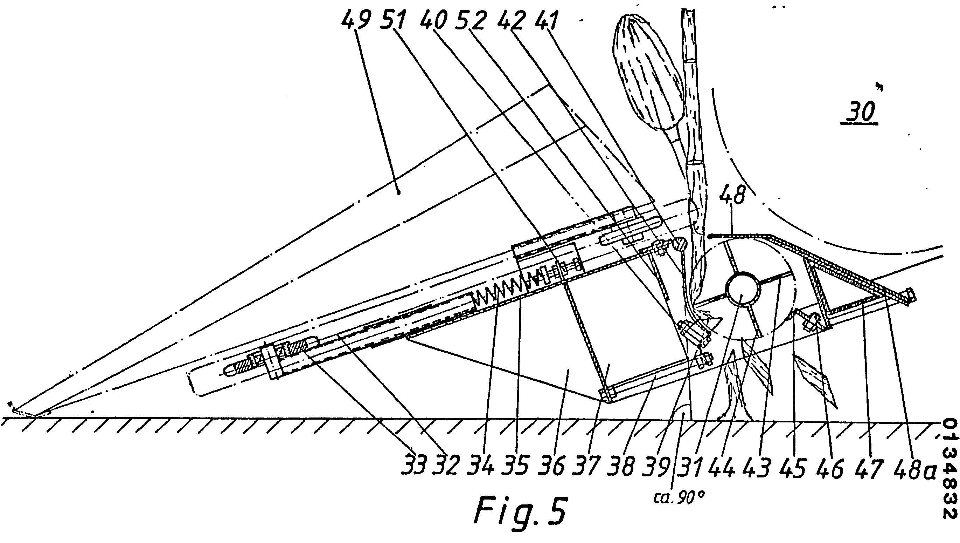

In Fig. 5 bezeichnet 30 die Förderschnecke für die geernteten Früchte und 31 die Einzugswalze mit den einzelnen Stegen 43, die Schlitze für die Messer 39 aufweisen. Die Einzugswalze 31 liegt fast ganz unterhalb des Führungsblechs 48. Dieses verbindet gleichzeitig mit seiner rüchwärtigen Verlängerung das Erntegerät mit dem Hauptträger 47 des Erntefahrzeuges. Die Messer 39, die in einer Reihe in regelmäßigen Abständen angeordnet sind, sind durch eine Spannleiste 40 über Schrauben geklemmt, so daß ein einfaches und leichtes Auswechseln nach Lösen der Schrauben und Anheben der Spannleiste 40 möglich ist. Die Einzugswalze 31 ist nach vorne durch die Teilummantelung 42 mit der Brechkante 41 abgeschlossen. Die Teilummantelung 42 ist im oberen Teil eben ausgebildet, so ergibt sich eine gute, senkrechte Führung für die schematisch eingezeichnete Pflanze, die während des Durchzugsvorganges nicht nach hinten geneigt ist. Hierdurch ergibt sich ein besonders gutes, sauberes Abbrechen der zu erntenden Früchte mit hoher Fruchtqualität und geringen Verlusten. Die Neigung des ebenen Teils der Teilummantelung 42 ist dabei derart, daß etwa eine senkrechte Stellung in Arbeitsposition des Erntegeräts erreicht wird.

Die Teilummantelung 42 weist an ihrer Unterseite eine Einstellschraube 38 auf, die eine allgemeine Einstellung der Teilummantelung 42 erlaubt und durch die eventuell auftretender Verschleiß an der Teilummantelung 42 oder den Durchzugsstegen 43 ausgeglichen werden kann. Auf der Rückseite der Einzugswalze 31 ist noch ein Abstreifmesser 45, das über Schrauben 46 an einem Steg des Deckblechs 48 befestigt ist, vorhanden. Dieses dient dazu, Blätter o. ä. abzustreifen, die sich sonst um die Einzugswalze 31 und die Stege 43 legen könnten. Das Oberteil des Einzel-Erntemoduls wird durch die Platte 35 gebildet, an das sich seitlich Rahmenbleche 36 und 37 anschließen. Eine weitere Verstärkung wird durch die Stege 52 erreicht, so daß sich insgesamt eine sowohl leichte als auch widerstandfähige Schalenkonstruktion, die nach unten offen ist, ergibt.

Auf der Oberseite der Platte 35 ist eine Feder 34 mit der Einstellschraube 51 vorhanden, die das vordere Einzugskettenrad 33 mit der Kette 32 spannt. So ist eine stets einwandfreie Spannung der Einzugskette 32 gewährleistet. Über dem Einzel-Erntemodul selbst befindet sich die Teilerspitze 49, die hier nur angedeutet gezeichnet ist.

Die Kettenräder 33 sind in der gezeigten Ausführung aus Metall, sie können jedoch ebenso aus Kunststoff ausgeführt werden. Ebenso kann die Einzugskette 32 als Riemen ausgebildet sein, auf den Kunststoffmitnehmer augesetzt sind. Dann ergibt sich eine besonders leichte Ausführung des Erntegerätes, die die Montage des Erntegerätes auch an relativ kleinen Mähdreschern erlaubt.

Das erfindungsgemäße Erntegerät vereint in bisher unerreichter Weise einen Erntevorgang mit einem Abbrechen der Früchte von den Pflanzen, das zu geernteten Früchten guter Qualität führt mit der Möglichkeit einer gleichzeitigen Zerkleinerung. Trotzdem ist das erfindungsgemäße Erntegerät leichter, besser zu handhaben und kostengünstiger herzustellen, als die bisher bekannten Ausführungen. So ist es von der maschinentechnischen Seite her möglich, Maisanbau auch in Gegenden zu betreiben, in denen der erzielbare Gewinn bisher nicht ausreichte, um die teueren Maschineninvestitionen der bisher bekannten Maispflück- und Zerkleinerungsaggregate zu tragen.

## Patentansprüche

1. Erntegerät (19) zum Ernten von Mais oder anderen Körnerfrüchten, das insbesondere als Vorsatzgerät für einen Mähdrescher ausgebildet ist, mit einer Einzugsvorrichtung für die Erntepflanzen mit einem Pflückspalt (5) zwischen einer Einzugswalze (14, 24, 31, 54) und einer Teilummantelung (42) zum Durchzug der Erntepflanzen, wobei der Pflückspalt (5) quer zur Fahrtrichtung des Erntegerätes (19) angeordnet ist, dadurch gekennzeichnet, daß die Teilummantelung (42) in ihrem oberen Teil im wesentlichen in vertikaler Richtung gegen über dem Erdboden eben ausgebildet ist.

2. Erntegerät nach Anspruch 1, dadurch gekennzeichnet, daß der ebene Teil der Teilummantelung (42) in Arbeitsstellung gegenüber dem Erdboden etwas senkrecht steht.

3. Erntegerät nach Anspruch 1, dadurch gekennzeichnet, daß der ebene Teil der Teilummantelung (42) in Arbeitsstellung gegenüber dem Erdboden einen Winkel zwischen 80 und 100°, vorzugsweise zwischen 85 und 95° bildet.

4. Erntegerät nach einem oder mehreren der Ansprüche 1 bis 3, dadurch gekennzeichnet, daß die Teilummantelung (42) unterhalb der Einzugswalze (14, 24, 31, 54) eine Schlitzreihe zur Aufnahme von Schneidmessern (39, 57) aufweist.

5. Erntegerät nach Anspruch 4, dadurch gekennzeichnet, daß die Schneidmesser (39, 57) mittels Spannleisten (40, 58) unmittelbar an der Teilummantelung (42) festgelegt sind.

6. Erntegerät wenigstens nach Anspruch 1, dadurch gekennzeichnet, daß die Teilummantelung (42) außen unten eine Auflagekante für die Schneidmesser (39) und ihre Befestigungsvorrichtung aufweist.

7. Erntegerät nach einem oder mehreren der Ansprüche 1 bis 6, dadurch gekennzeichnet, daß die Teilummantelung (42) oben eine Brechkante (41, 55), insbesondere in Form eines Rundeisens aufweist und daß auf der anderen Spaltseite ein Führungs- und Abdeckblech (48, 59) angeordnet ist.

8. Erntegerät nach einem oder mehreren der Ansprüche 1 bis 7, dadurch gekennzeichnet, daß die Einzugswalze (14, 24, 31, 54) auf der Pflanzeneintrittsseite schneckenartig ausgebildet ist, wobei die schneckenartige Ausbildung vorzugsweise ein Drittel bis die Hälfte der gesamten Einzugswalzenlänge ausmacht.

9. Erntegerät nach einem oder mehreren der Ansprüche 1 bis 7, dadurch gekennzeichnet, daß es mehrteilig ausgebildet ist und vor den Einzugswalzen (12, 24, 31, 54) Teilerspitzen (7, 12, 23, 49, 70) mit Einzugsketten (13, 23, 32, 68) aufweist.

10. Erntegerät nach einem oder mehreren der Ansprüche 1 bis 9, dadurch gekennzeichnet, daß die Einzugsketten (13, 23, 32, 68) Einzelantriebe, vorzugsweise Elektro- oder Hydraulikmotore (64), aufweisen.

11. Erntegerät nach einem oder mehreren der vorhergehenden Ansprüche, dadurch gekennzeichnet, daß die Einzugsketten (13, 23, 32, 68) riemenförmig ausgebildet sind und insbesondere aus Kunststoff oder Gummi bestehen.

12. Erntegerät nach einem oder mehreren der vorhergehenden Ansprüche, dadurch gekennzeichnet, daß es aus mehreren gleichen Einzel-Erntemodulen zusammengesetzt ist, wobei die Modulabstände durch Zwischenstücke auf den Reihenabstand der Ernteplanzen einstellbar sind.

13. Erntegerät nach einem oder mehreren der vorhergehenden Ansprüche, dadurch gekennzeichnet, daß es eine Teilummantelung einer Einzugswalze (14, 24, 31, 54) aufweist, die in Arbeitsstellung gegenüber dem Erdboden etwa senkrecht steht.

**Revendications**

1. Cueilleur (19) pour le moissonnage du maïs ou d'autres grains, qui est constitué en particulier par un cueilleur frontal pour une moissonneuse-batteuse, comportant un dispositif d'engagement pour les plantes à moissonner, avec une fente de cueillage (5) formée entre un rouleau d'engagement (14, 24, 31, 54) et une enveloppe partielle (42) pour l'entraînement des plantes moissonnées, la fente de cueillage (5) étant disposée transversalement au sens de la marche du cueilleur (19), caractérisé en ce que l'enveloppe partielle (42) est d'une configuration sensiblement plane dans la direction verticale par rapport au sol dans sa partie supérieure.

2. Cueilleur selon la revendication 1, caractérisé en ce que, dans la position de travail, la partie plane de l'enveloppe partielle (42) est à peu près perpendiculaire par rapport au sol.

3. Celluleur selon la revendication 1, caractérisé en ce que, dans la position de travail, la partie plane de l'enveloppe partielle (42) forme avec le sol un angle compris entre 80° et 100°, de préférence entre 85° et 95°.

4. Cueilleur selon une ou plusieurs des revendications 1 à 3, caractérisée en ce que l'enveloppe partielle (42) présente, au-dessous du rouleau d'engagement (14, 24, 31, 54), une série de fentes destinées à recevoir les couteaux (39, 57).

5. Cueilleur selon la revendication 4, caractérisé en ce que les couteaux (39, 57) sont fixés directement à l'enveloppe partielle (42) au moyen de barrettes de serrage (40, 58).

6. Cueilleur au moins selon la revendication 1, caractérisé en ce que l'enveloppe partielle (42) présente extérieurement en bas un bord porteur pour les couteaux (39) et pour leur dispositif de fixation.

7. Cueilleur selon une ou plusieurs des revendications 1 à 6, caractérisé en ce que l'enveloppe partielle (42) présente, en haut, un chanfrein (41, 55), formé en particulier par un fer rond, et en ce que, de l'autre côté de la fente, est disposée une tôle de guidage et de recouvrement (48, 59).

8. Cueilleur selon une ou plusieurs des revendications 1 à 7, caractérisé en ce que le rouleau d'engagement (14, 24, 31, 54) présente la configuration d'une vis sur le côté d'entrée des plantes, la configuration de vis représentant de préférence un tiers à la moitié de la longueur totale du rouleau d'engagement.

9. Cueilleur selon une ou plusieurs des revendications 1 à 7, caractérisé en ce qu'il est réalisé en plusieurs parties et qu'il présente en avant des rouleaux d'engagement (12, 24, 31, 54), des diviseurs (7, 12, 23, 49, 70) munis de chaînes d'engagement (13, 23, 32, 68).

10. Cueilleur selon une ou plusieurs des revendications 1 à 9, caractérisé en ce que les chaînes d'engagement (13, 23, 32, 68) possèdent des entraînements individuels, de préférence, des moteurs électriques ou hydrauliques (64).

11. Cueilleur selon une ou plusieurs des revendications précédentes, caractérisé en ce que les chaînes d'engagement (13, 23, 32, 68) ont la configuration de courroies et sont en particulier faites de matière plastique ou de caoutchouc.

12. Cueilleur selon une ou plusieurs des revendications précédentes, caractérisé en ce qu'il est composé de plusieurs modules cueilleurs individuels identiques, les écartements des modules pouvant être réglés sur l'écartement des rangs des plantes à moissonner à l'aide d'intercalaires.

13. Cueilleur selon une ou plusieurs des revendications précédentes, caractérisé en ce qu'il présente une enveloppe partielle d'un rouleau d'engagement (14, 24, 31, 54), qui est à peu près perpendiculaire au sol dans la position de travail.

**Claims**

1. Harvesting apparatus (19) for the harvesting of maize or other cereals, which is designed in particular as an attachment for a combine harvester, having a draw-in device for the harvested plants with a picking gap (5) between a draw-in roller (14, 24, 31, 54) and a partial casing (42) for the drawing-through of the harvested plants, the picking gap (5) being arranged transversely to the travelling direction of the harvesting apparatus (19), characterized in that the partial casing (42) is designed essentially flat in its upper part in vertical direction with respect to the ground.

2. Harvesting apparatus according to Claim 1, characterized in that the flat part of the partial casing (42) is approximately perpendicular to the ground in the working position.

3. Harvesting apparatus according to Claim 1, characterized in that the flat part of the partial casing (42) forms an angle between 80 and 100°, preferably between 85 and 95°, to the ground in the working position.

4. Harvesting apparatus according to one or more of Claims 1 to 3, characterized in that the partial casing (42) has underneath the draw-in roller (14, 24, 31, 54) a row of slits for receiving cutting knives (39, 57).

5. Harvesting apparatus according to Claim 4, characterized in that the cutting knives (39, 57) are fixed directly on the partial casing (42) by means of clamping bars (40, 58).

6. Harvesting apparatus at least according to Claim 1, characterized in that the partial casing (42) has on the outside at the bottom a bearing edge for the cutting knives (39) and their fastening device.

7. Harvesting apparatus according to one or more of Claims 1 to 6, characterized in that the partial casing (42) has at the top a crushing edge (41, 55), in particular in the form of an iron rod, and in that a guiding and covering plate (48, 49) is arranged on the other side of the gap.

8. Harvesting apparatus according to one or more of Claims 1 to 7, characterized in that the draw-in roller (14, 24, 31, 54) is designed on the plant entry side in the manner of a screw, the screw-like design preferably making up one third to one half of the total draw-in roller length.

9. Harvesting apparatus according to one or more of Claims 1 to 7, characterized in that it is of a multipart design and has in front of the draw-in rollers (12, 24, 31, 54) divider points (7, 12, 23, 49, 70) with draw-in chains (13, 23, 32, 68).

10. Harvesting apparatus according to one or more of Claims 1 to 9, characterized in that the draw-in chains (13, 23, 32, 68) have individual drives, preferably electric or hydraulic motors (64).

11. Harvesting apparatus according to one or more of the preceding Claims, characterized in that the draw-in chains (13, 23, 32, 68) are of belt-shaped design and consist in particular of plastic or rubber.

12. Harvesting apparatus according to one or more of the preceding Claims, characterized in that it is made up of a plurality of identical individual harvesting modules, it being possible to set the module intervals to the row spacing of the harvested plants by means of intermediate pieces.

13. Harvesting apparatus according to one or more of the preceding Claims, characterized in that it has a partial casing of a draw-in roller (14, 24, 31, 54) which is approximately perpendicular to the ground in the working position.

Fig. 1

EP 0 134 832 B1

Fig. 2

Fig. 3

*Fig. 4*

EP 0 134 832 B1

0134832

30

48

49 51 40 52 42 41

33 32 34 35 36 37 38 39 31 44 43 45 46 47 48a

ca. 90°

Fig. 5